(19)

Europäisches Patentamt

European Patent Office

Office européen des brevets

(11) **EP 4 539 356 A1**

(12) **EUROPEAN PATENT APPLICATION**

(43) Date of publication:
16.04.2025 Bulletin 2025/16

(21) Application number: 24205711.5

(22) Date of filing: 09.10.2024

(51) International Patent Classification (IPC):
*H04B 7/185* (2006.01)  *H04L 5/00* (2006.01)
*H04W 24/02* (2009.01)  *H04W 36/00* (2009.01)
*H04W 48/20* (2009.01)  *H04W 72/51* (2023.01)
*H04W 76/15* (2018.01)  *H04W 88/08* (2009.01)
*G06F 9/48* (2006.01)  *G06F 9/50* (2006.01)
*G06N 3/045* (2023.01)

(52) Cooperative Patent Classification (CPC):
H04W 76/15; G06F 9/4806; G06F 9/4881;
G06F 9/5061; G06N 3/045; H04B 7/18504;
H04B 7/18506; H04L 5/0055; H04W 24/02;
H04W 36/0069; H04W 48/20; H04W 72/51;
H04W 88/08

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 12.10.2023 IN 202341068742
11.09.2024 IN 202341068742

(71) Applicant: Samsung Electronics Co., Ltd
Suwon-si, Gyeonggi-do 16677 (KR)

(72) Inventors:
• VRIND, Tushar
560048 Bengaluru (IN)
• KUMAR, Chandan
560048 Bengaluru (IN)
• DAS, Debabrata
560048 Bengaluru (IN)

(74) Representative: Marks & Clerk LLP
15 Fetter Lane
London EC4A 1BW (GB)

(54) **METHODS AND SYSTEMS FOR ASSIGNING AERIAL CELL TO USER EQUIPMENTS IN A WIRELESS COMMUNICATION SYSTEM**

(57) There is provided a method for assigning an aerial cell to one or more user equipment (UEs) in a wireless communication system. The method includes establishing a data connection between one or more user equipments (UEs) and a terrestrial cell, receiving one or more feedback parameters from each of the one or more UEs via the data connection, and assigning an aerial cell to a first UE, among the one or more UEs, based on at least one of the one or more feedback parameters received from the first UE and a number of the one or more UEs present in a coverage area of the aerial cell, wherein the coverage area is part of a terrestrial coverage area of the terrestrial cell.

FIG. 4

400

| establishing, by a terrestrial cell, a data connection betwwen the one or more UEs and the terrestrial cell | 401 |

| receiving one or more feedback parameters from each of the one or more UEs over the data connection | 403 |

| assigning, an aerial cell to at least one UE from the one or more UEs based on at least one or more feedback parameters and a number of the one or more UEs present in an aerial coverage area of the aerial cell, | 405 |

EP 4 539 356 A1

**Description**

BACKGROUND

**1. Field**

The disclosure generally relates to systems, apparatuses and methods for wireless communication, and in particular, to systems, apparatuses and methods for assigning an aerial cell to one or more user equipments (UEs) in a wireless communication system.

**2. Description of Related Art**

Recently, artificial intelligence (AI) and/or machine learning (ML) applications are used to implement multimedia services in wireless networks. For example, AI/ML inference models are executed at the user equipment (UE) or the cloud/edge to perform various tasks such as object classification, prediction, and forecasting tasks. However, inference processing requires a lot of resources (such as processing power and system memory), and low latency to produce useful inference results. To perform inference at the UE, the trained and downloaded AI/ML models run on neural processing units (NPUs) or graphics processing units (GPUs). On the other hand, when the UE is constrained (e.g., UE has limited resources), the raw multimedia data is transferred to the cloud (usually a neighboring edge server) so that inference can take place at the edge server have more resources that the UE. In such cases, high network availability and bandwidth are necessary to guarantee reliable and fast data transfer, as they can lower the end-to-end latency in inference.

In a related art technique, overheads in communication and delays between a UE and a cloud may be alleviated by exploring a device-edge co-inference model. In such a co-inference model, the edge handles the latter layers of the deep neural network (DNN) while the UE computes the first few layers. The intermediate features are moved to the edge by UE over the network infrastructure. This technique provides various advantages such as reducing the bandwidth requirements, sharing computing load, and enhancing data privacy.

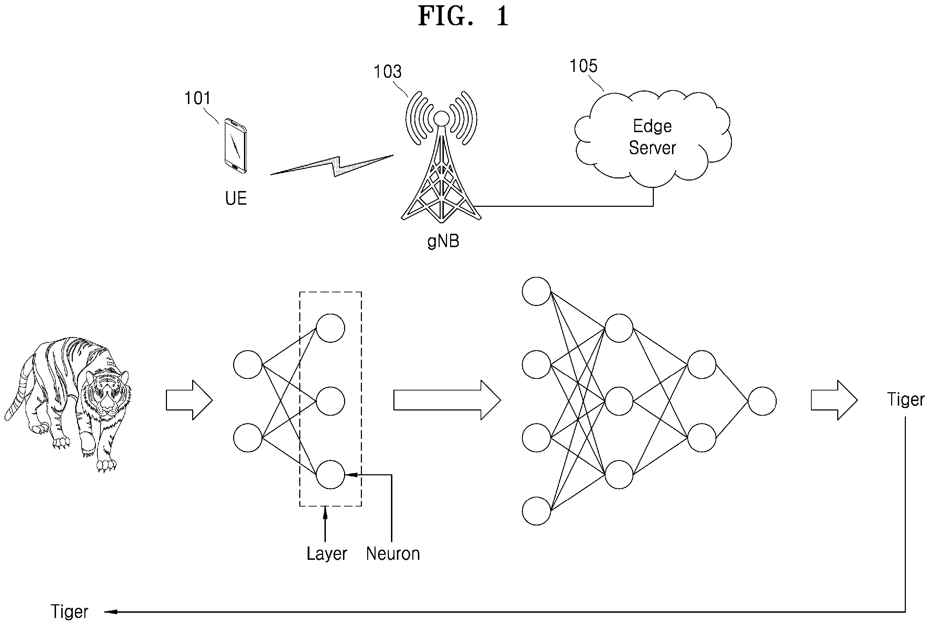

FIG. 1 illustrates an AI/ML model split for an image recognition task according to a related art technique. As shown in FIG. 1, the UE 101 evaluates the first few layers of the convolutional neural network (CNN) and shares the intermediate results with the edge server 105 over the wireless network 103. The edge server 105 computes the remaining layers and shares the inference with the UE 101. The UE 101 evaluates the privacy and security-sensitive layers, and the edge server 105 evaluates the computation-intensive layers. For the co-inference task, splitting the AI/MI, model is a joint optimization of communication latency, computation latency, and energy consumption. As the number of layers evaluated at the UE 101 increases, the payload of the intermediate results transferred to the edge server 105 reduces. However, due to the limited computing and power resources of the UE 101, processing more than a few initial layers of the CNN results in higher latency. Therefore, evaluating the condition of the wireless link and the workload on the edge server 105 is essential for identifying the optimal split point for co-inference.

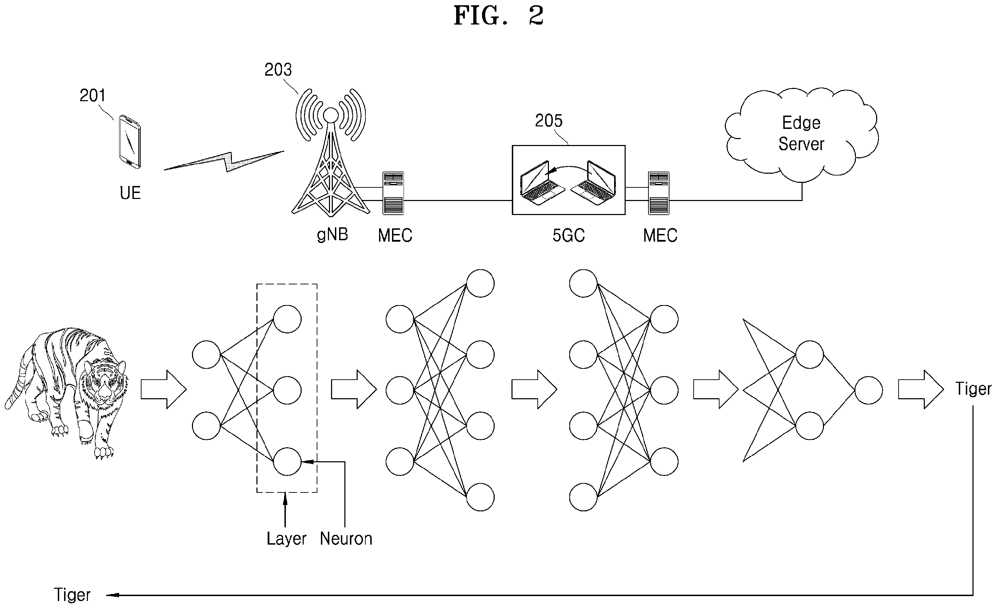

Further, in the Sixth Generation (6G) wireless network, there is sufficient computational capability across various nodes with mobile edge computing (MEC) functionality. Accordingly, a multi-point split AI/ML co-inference can be implemented. FIG. 2 illustrates a multi-split co-inference architecture in a wireless communication system according to another related art technique. As shown in FIG. 2, each of the nodes (e.g., a next-generation NodeB (gNB) 203, and a 5G core (5GC) 205) has an attached MEC with computation capability. Accordingly, the inference task of the UE 201 is split between the UE 201, the gNB 203, and the 5GC 205. However, the related art techniques do not analyze the wireless channels between the UE 201 and the network 203, and 205 to aid the split point decision for the device-edge co-inference model and to improve the data communication and reduce the delay.

Further, the primary requirements for split AI/ML in a 5G/6G network are outlined in by third-generation partnership project (3GPP). Low-altitude aerial platforms (LAPs)-hosted aerial cells provide a way to lower the latency and boost the reliability of wireless communication, which makes them a great enabler for (MEC) in 6G wireless networks. The 3GPP has included the requirement for supporting LAP-based aerial cells, termed uncrewed aerial nodeB (UxNB) in the cellular network. The related art techniques may enhance the number of user equipment (UEs) during each training iteration in the 6G network through aerial cell-assisted federated learning (FL). Although, there are techniques that utilize LAP to support MEC and co-inference, these related art techniques do not address the deployment challenges associated with using aerial cells for AI/ML model splitting. Additionally, the related art techniques lack strategies for planning the trajectory of the LAP to optimize co-inference for complex multimedia tasks within the wireless network.

Therefore, there exists a need to develop techniques for using aerial cell in the wireless communication system, while addressing at least the aforementioned challenges.

SUMMARY

According to an aspect of the disclosure, there is provided a method performed in a wireless communication system, the method including: establishing a data connection between one or more user equipments (UEs) and a terrestrial cell, receiving one or more feedback parameters from each of the one or more UEs via the data connection, and assigning an aerial cell to a first UE, among the one or more UEs, based on at least one of the one or more feedback parameters received from the first UE and a number of the one or more UEs present in a coverage area of the aerial cell, wherein the coverage area is part of a terrestrial coverage area of the terrestrial cell.

According to another aspect of the disclosure, there is provided a system for wireless communication, the system including: at least one processor configured to: establish a data connection between the one or more user equipments (UEs) and a terrestrial cell, receive one or more feedback parameters from each of the one or more UEs via the data connection; and assign an aerial cell to a first UE, among the one or more UEs, based on at least one of the one or more feedback parameters received from the first UE and a number of the one or more UEs present in an aerial coverage area of the aerial cell, wherein the aerial coverage area is part of a terrestrial coverage area of the terrestrial cell.

At least some of the above and other features of the disclosure are set out in the claims.

BRIEF DESCRIPTION OF DRAWINGS

These and other features, aspects, and advantages of the disclosure will become better understood when the following detailed description is read with reference to the accompanying drawings in which like characters represent like parts throughout the drawings, wherein:

FIG. 1 illustrates a related art artificial intelligence (AI)/machine learning (ML) model split for an image recognition task;
FIG. 2 illustrates a related art multi-split co-inference architecture in a wireless communication system;
FIG. 3 illustrates an example of a wireless communications system for assigning an aerial cell to one or more user equipment (UEs) in a wireless communication system, in accordance with an embodiment of the disclosure;
FIG. 4 illustrates a flow diagram illustrating a method for assigning an aerial cell to the one or more UEs in the wireless communication system, in accordance with an embodiment of the disclosure;
FIG. 5 illustrates a signal flow diagram between a terrestrial cell, the aerial cell and the one or more UEs, in accordance with an embodiment of the disclosure;
FIG. 6 illustrates a diagram of splitting an inference task between the terrestrial cell, the aerial cell and the one or more UEs, in accordance with an embodiment of the disclosure; and
FIG. 7 illustrates a block diagram of a system for assigning the aerial cell to the one or more UEs in the wireless communication system, in accordance with an embodiment of the disclosure.

Further, skilled artisans will appreciate that elements in the drawings are illustrated for simplicity and may not have necessarily been drawn to scale. For example, the flow charts illustrate the method in terms of operations involved to help to improve understanding of aspects of the disclosure. However, the disclosure is not limited thereto, and as such, other operations may be included to the methods illustrated in the flow charts. Furthermore, in terms of the construction of the system, one or more components of the system may have been represented in the drawings by conventional symbols, and the drawings may show only those specific details that are pertinent to understanding the embodiments of the disclosure so as not to obscure the drawings with details that will be readily apparent to those of ordinary skill in the art having the benefit of the description herein.

DETAILED DESCRIPTION

For the purpose of promoting an understanding of the principles of the disclosure, reference will now be made to the embodiment illustrated in the drawings and specific language will be used to describe the same. It will nevertheless be understood that no limitation of the scope of the disclosure is thereby intended, such alterations and further modifications in the illustrated system, and such further applications of the principles of the disclosure as illustrated therein being contemplated as would normally occur to one skilled in the art to which the disclosure relates.

It will be understood by those skilled in the art that the foregoing general description and the following detailed description are explanatory of the disclosure and are not intended to be restrictive thereof.

Reference throughout this specification to "an aspect", "another aspect" or similar language means that a particular feature, structure, or characteristic described in connection with the embodiment is included in at least one embodiment of the disclosure. Thus, appearances of the phrase "according to an embodiment", "according to another embodiment" and similar language throughout this specification may, but do not necessarily, all refer to the same embodiment.

The terms "comprises", "comprising", or any other variations thereof, are intended to cover a non-exclusive inclusion, such that a process or method that comprises a list of operations does not include only those operations but may include other operations not expressly listed or inherent to such process or method. Similarly, one or more devices or sub-systems or elements or structures or components proceeded by "comprises... a" does not, without more constraints, preclude the existence of other devices or other sub-systems or other elements or other structures or other components or additional devices or additional sub-systems or additional elements or additional structures or additional components.

Embodiments herein may be described and illustrated in terms of blocks which carry out a described function or functions. These blocks, which may be referred to herein as managers, units, modules, hardware components, terms ending in "~er" or the like, are physically implemented by analog and/or digital circuits such as logic gates, integrated circuits, microprocessors, microcontrollers, memory circuits, passive electronic components, active electronic components, optical components, hardwired circuits and the like, and may optionally be driven by a firmware. The circuits may, for example, be embodied in one or more semiconductor chips, or on substrate supports such as printed circuit boards and the like. The circuits constituting a block may be implemented by dedicated hardware, or by a processor (e.g., one or more programmed microprocessors and associated circuitry), or by a combination of dedicated hardware to perform some functions of the block and a processor to perform other functions of the block. Each block of the embodiments may be physically separated into two or more interacting and discrete blocks without departing from the scope of the disclosure. Likewise, the blocks of the embodiments may be physically combined into more complex blocks without departing from the scope of the disclosure.

The term "couple" and the derivatives thereof refer to any direct or indirect communication between two or more elements, whether or not those elements are in physical contact with each other. The terms "transmit", "receive", and "communicate" as well as the derivatives thereof encompass both direct and indirect communication. The term "or" is an inclusive term meaning "and/or". The phrase "associated with," as well as derivatives thereof, refer to include, be included within, interconnect with, contain, be contained within, connect to or with, couple to or with, be communicable with, cooperate with, interleave, juxtapose, be proximate to, be bound to or with, have, have a property of, have a relationship to or with, or the like. The term "controller" refers to any device, system, or part thereof that controls at least one operation. The functionality associated with any particular controller may be centralized or distributed, whether locally or remotely. The phrase "at least one of," when used with a list of items, means that different combinations of one or more of the listed items may be used, and only one item in the list may be needed. For example, "at least one of A, B, and C" includes any of the following combinations: A, B, C, A and B, A and C, B and C, and A and B and C, and any variations thereof. As an additional example, the expression "at least one of a, b, or c" may indicate only a, only b, only c, both a and b, both a and c, both b and c, all of a, b, and c, or variations thereof. Similarly, the term "set" means one or more. Accordingly, the set of items may be a single item or a collection of two or more items.

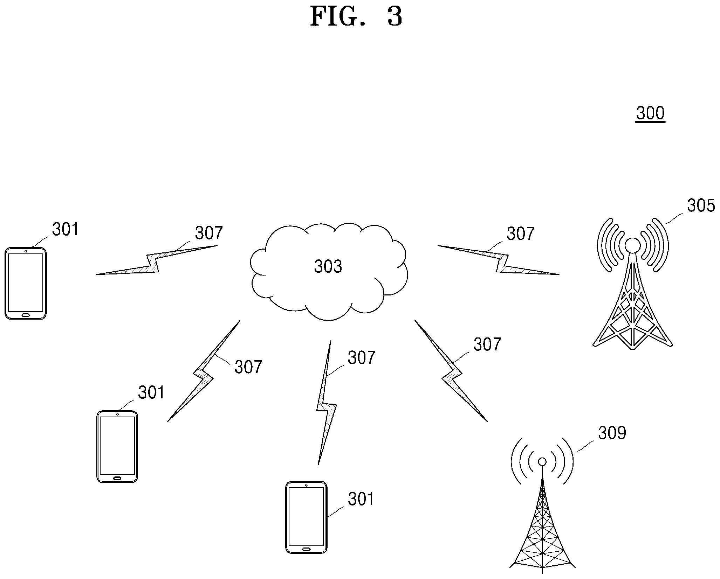

FIG. 3 illustrates an example of a wireless communication system for assigning an aerial cell to one or more user equipment (UEs) in a wireless communication system, in accordance with an embodiment of the disclosure.

As shown in FIG. 3, the wireless communication system 300 may include one or more UEs 301, a core network 303, a terrestrial base station 305, and a non-terrestrial aerial low altitude platform (LAP), such as an aerial base station or cell 309. While the terrestrial base station 305 has been described as a base station, it may serve a terrestrial cell (e.g., coverage area). The terrestrial base station 305 may establish a data connection with one or more of the UEs 301 within such a terrestrial cell as will be described. Additionally, while the aerial base station 309 may subsequently be referred to as an aerial cell, such an aerial cell may be the coverage area provided by the aerial base station 309. In some examples, the wireless communication system 300 may be a Long Term Evolution (LTE) network, an LTE-Advanced (LTE-A) network, an LTE-A Pro network, a New Radio (NR) network, a 5G network, and a 6G network. In some examples, the wireless communications system 300 may support enhanced broadband communications, ultra-reliable (e.g., mission-critical) communications, low latency communications, communications with low-cost and low-complexity devices, or any combination thereof.

The terrestrial base station 305 may be dispersed throughout a geographic area to form the wireless communications system 300. The terrestrial base station 305 may include devices in different forms or having different capabilities. For example, the terrestrial base station 305 may have mobile edge computing (MEC) capability. The terrestrial base station 305 and the one or more UEs 301 may wirelessly communicate (i.e., establish a data connection) via one or more communication links 307. The terrestrial base station 305 may provide a terrestrial coverage area over which the one or more UEs 301 and the terrestrial base station 305 may establish the one or more communication links 307. The terrestrial coverage area may be an example of a geographic area over which the terrestrial base station 305 and one of the UE 301 may support the communication of signals according to one or more radio access technologies.

As shown in FIG. 3, the wireless communication system 300 may also include the aerial base station 309 (which may be referred to as an aerial cell) which may provide an aerial coverage area. The aerial coverage area is a part of the terrestrial coverage area. The aerial cell 309 may establish the communication link 307 with the one or more UEs 301 over the aerial coverage area. The aerial cell 309 may be assigned to the one or more UEs 301 in accordance with the techniques described herein.

The one or more UEs 301 may be dispersed throughout the coverage area of the wireless communications system 300, and each UE 301 may be stationary, mobile, or both at different times. The one or more UEs 301 may be devices in different forms or having different capabilities.

The terrestrial base station 305 described herein may include or may be referred to by a person having ordinary skill in the art as a base transceiver station, a radio base station, an access point, a radio transceiver, a NodeB, an eNodeB (eNB), a next-generation NodeB or a gNodeB (either of which may be referred to as a gNB), a Home NodeB, a Home eNodeB, or other suitable terminology.

The one or more UEs 301 may include or may be referred to as a mobile device, a wireless device, a remote device, a handheld device, a subscriber device, or some other suitable terminology, where the "device" may also be referred to as a unit, a station, a terminal, or a client, among other examples. The one or more UEs 301 may also include or may be referred to as a personal electronic device, such as a cellular phone, a personal digital assistant (PDA), a tablet computer, a laptop computer, or a personal computer. In some examples, the one or more UEs 301 may include or be referred to as a wireless local loop (WLL) station, an Internet of Things (IoT) device, an Internet of Everything (IoE) device, or a machine-type communications (MTC) device, among other examples, which may be implemented in various objects such as appliances, or vehicles, meters, among other examples.

The one or more UEs 301 described herein may be able to communicate with various types of devices, such as other UEs 301 that may sometimes act as relays as well as the terrestrial base station 305 and the network equipment including macro eNBs or gNBs, small cell eNBs or gNBs, or relay base stations, among other examples, as shown in FIG. 3.

Further, it should be noted that although only three UEs 301 are depicted in FIG. 3 for illustration purposes, the wireless communication system 300 may include additional UEs not shown in FIG. 3.

According to an embodiment, the techniques described herein may be in implemented in the wireless communication system 300. However, any other wireless communication system capable of assigning the aerial cell to one or more UEs in line with the techniques described herein is within the scope of this disclosure. Further, it should be noted that the terms "terrestrial base station" and "terrestrial cell" have been used interchangeably throughout the description and the drawings. It should also be noted that similar reference numerals have been used in the drawings to maintain the consistency throughout the description and the drawings.

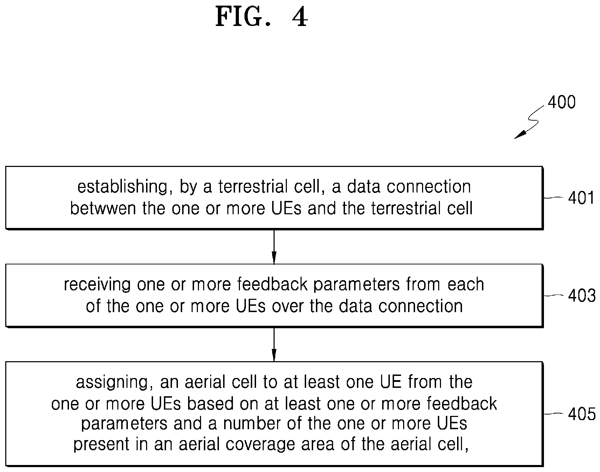

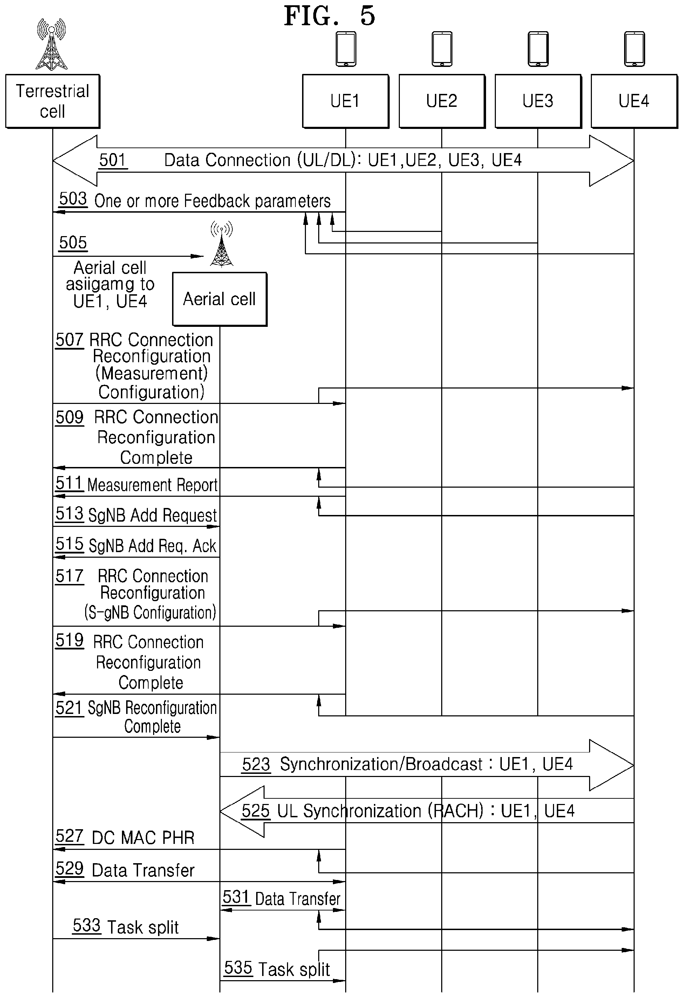

FIG. 4 illustrates a flow diagram depicting a method for assigning the aerial cell to the one or more UEs in the wireless communication system, in accordance with an embodiment of the disclosure. FIG. 5 illustrates a signal flow diagram between the terrestrial base station 305 or terrestrial cell, the aerial base station 309 or aerial cell, and the one or more UEs 301, in accordance with an embodiment of the disclosure. According to an embodiment, the description of Figs. 3, 4, and 5 are explained in conjunction with each other. While terrestrial cell may be described, this may be understand as a terrestrial base station which has an associated terrestrial cell or coverage area.

Referring now to FIG. 4, in operation 401, the method may include establishing a data connection between one or more UEs 301 and a terrestrial base station 305 or terrestrial cell. For example, the terrestrial cell 305 may establish a data connection with the one or more UEs 301. For example, as shown in FIG. 5, in operation 501, the terrestrial cell 305 may establish a data connection with the one or more UEs via the communication link. For example, the one or more UEs may include, but is not limited to, a first UE UE1, a second UE UE2, a third UE UE3 and a fourth UE UE4. It should be noted that the data connection may be established using the techniques known to a person skilled in the art.

In operation 403, the method may include receiving one or more feedback parameters from each of the one or more UEs 301. For example, the terrestrial cell 305 may receiving one or more feedback parameters from each of the one or more UEs 301 via the established data connection. As shown in FIG. 5, at operation 503, the terrestrial cell 305 may receive the one or more feedback parameters over the data connection from each of the UEs (e.g., UE1, UE2, UE3 and UE4). According to an embodiment, the terrestrial cell 305 may receive the one or more feedback parameters for an aerial scheduling period (ASP). The ASP may refer to a period during which the aerial cell 309 is within the coverage area of the terrestrial cell 305. In other words, a period during which a portion of the aerial and terrestrial cells geographically overlap. Accordingly, the terrestrial cell 305 may receive the one or more feedback parameters for the ASP.

According to an embodiment, the terrestrial cell 305 may receive the one or more feedback parameters after an expiry of a predefined time period. The predefined time period may be configured by the terrestrial cell 305. According to another embodiment, the terrestrial cell 305 may receive receiving the one or more feedback parameters after occurrence of at least one predefined trigger event. According to an embodiment, the at least one predefined trigger event may be a preconfigured event in the UE that is triggered at the time of beginning of one of an inferencing process. According to another embodiment, the at least one predefined trigger event may be a preconfigured event in the UE that is triggered at the time of begin of the inferencing process using a predefined AI model, such as Alexnet, ResNet, LLM, etc,). According to another embodiment, the at least one predefined trigger event may be a power level of the UE being below a predefined threshold at the beginning of the interference process. The predefined threshold may be configured by the UE. According to another embodiment, the at least one predefined trigger event may be a predefined time in the UE and the terrestrial cell 305 may receive the one or more feedback parameters upon expiry of the said predefined timer. It should be noted that few example of the predefined event have been provided and any other event configured by the UE will fall within the scope of the disclosure.

In yet another embodiment, the terrestrial cell 305 may receive the one or more feedback parameters in response to a request from the terrestrial cell. Accordingly, the terrestrial cell 305 may request the one or more UEs 301 to share the one or more feedback parameters and each of the one or more UEs 301 may share the one or more feedback parameters in response to the request.

According to an embodiment, the one or more feedback parameters include a channel quality index (CQI), an inference load (ILD), and a mobility status of the corresponding UE. The CQI indicates a signal strength of a terrestrial signal associated with the terrestrial cell 305. The ILD indicates maximum load of an inference task based on available computation power with each of the one or more UEs 301. According to an embodiment, the ILD may be determined based on required tera operations per second (TOPS) $D_T^R$ to execute the inference task and an available power $D_T^A$ to execute the inference task. Accordingly, the ILD may be determined as:

$$ILD = D_T^R/D_T^A \quad \dots\dots\dots\dots\dots(1)$$

Further, the mobility status of corresponding UE indicates a probability of the corresponding UE to stay static in the aerial coverage area for the ASP. It should be noted that the mobility status may be determined using the techniques known to a person skilled in the art, such as Poisson's probability technique.

In operation 405, the method may include assigning an aerial cell 309 to at least one UE, among the one or more UEs 301, based on at least one or more feedback parameters. For example, the method may include assigning, for the ASP, the aerial cell to at least one UE from the one or more UEs 301 based on at least one or more feedback parameters. For example, as shown in FIG. 5, at operation 505, the aerial cell 309 may be assigned to the first UE UE1 and the fourth UE UE4. According to an embodiment, the aerial cell 309 may be assigned to the at least one UE based on the one or more feedback parameters of the at least one UE satisfying a criteria. The criteria may include a threshold value. For example, the aerial cell 309 may be assigned to the at least one UE based on the one or more feedback parameters of the at least one UE satisfying a corresponding threshold value. The threshold value may be predefined and predetermined. In an example case in which the CQI of the at least one UE is below a CQI threshold, the aerial cell 309 may be assigned to the at least one UE to provide a better service to the at least one UE. For example, the CQI of the at least one UE being below a CQI threshold may mean that the signal strength between the terrestrial cell 305 and the at least one UE is poor. In an example case in which the LDI is above a LDI threshold, the aerial cell 309 may be assigned to the at least one UE to reduce the inference load on the at least one UE. For example, the LDI being above a LDI threshold may mean that the maximum load of the inference task is beyond the capacity of the at least one UE. In an example case in which the mobility status of the at least one UE is above a mobility threshold, the aerial cell 309 may be assigned to the at least one UE. For example, the mobility status of the at least one UE being above a mobility threshold may mean that the at least one UE is mobility status of the at least one UE is static in aerial coverage. In a further example, the aerial cell 309 may be assigned to more than one UE based on below equation 2:

$$ACAD_w = (LDI \times P_s) \times \left(\frac{M_{CQI} - R_{CQI}}{S_{CQI}}\right) \dots(2)$$

In equation 2, ACADw represents assignment parameter which determines if the aerial cell 309 is to be assigned or not, $M_{CQI}$ is the maximum value of the CQI, $R_{CQI}$ is reported CQI from the UE, and $S_{CQI}$ is a scaling factor. Accordingly, for every ASP, UEs with higher $ACAD_w$ get considered to be served by the aerial cells 309, if the UEs have higher inference requirement (i.e. inference load (ILD), the UEs are more probable to stay static for the next ASP and have a lower CQI for the terrestrial cell 305.

According to an embodiment, a number of the one or more UEs present in the aerial coverage area is also or alternatively considered while assigning the aerial cell 309 to the at least one UE. For example, in operation 405, the method may include assigning an aerial cell 309 to at least one UE, among the one or more UEs 301, based on at least one or more feedback parameters and/or a number of the one or more UEs 301 present in an aerial coverage area of the aerial cell 309 (i.e., aerial base station). In an example case in which the number of the one or more UEs 301 is below a predetermined number of UEs, then the aerial cell 309 may be assigned to the at least one UE. In an example case in which the one or more feedback parameters corresponding to more than one UE satisfies the corresponding predefined thresholds, then the number of the one or more UEs 301 present in the aerial coverage area helps in determining whether the aerial cell 309 shall be assigned to each of the more than one UE or not. In an example case in which the number of the one or more UEs 301 present in the aerial coverage area is less, then the aerial cell 309 may be assigned to a more number of UEs 301 and vice versa.

According to an embodiment, each of the predefined CQI threshold, the predefined LDI threshold, the predefined mobility threshold, and the predetermined number of UEs may be configured by the terrestrial cell 305.

According to an embodiment, the at least one UE may be connected with the aerial cell 309 in a dual connectivity (DC) mode. The at least one UE may be connected with the aerial cell 309 in accordance with known techniques, as shown in FIG. 5. For example, the at least one UE (e.g., the first UE UE1 and the fourth UE UE4) may establish a data connection with the aerial cell 309 through operations 507-531. For example, the operations may include, but is not limited to, performing an RRC connection reconfiguration 507, performing an RRC connection reconfiguration completion 509, sending a measurement report 511 by one or more of the UEs, performing a SgNB add request 513, performing a SgNB add request acknowledgement 515, performing an RRC connection reconfiguration 517 related to the SgNB configuration, performing an RRC connection reconfiguration completion 519 related to the SgNB configuration, and performing SgNB reconfiguration completion 521. Moreover, the method may include performing synchronization 523 with the one or more UEs and the one or more UEs performing an uplink (UL) synchronization 525 with the aerial cell 309. Also, the one or more UEs may perform DC MAC PHR 527. According to an embodiment, data transfer 529 and 531 may occur based on the established data connections. One or more of these operations may be implemented by techniques known to a person skilled in the art, and as such, these operations are not explained here in detail for the sake of brevity.

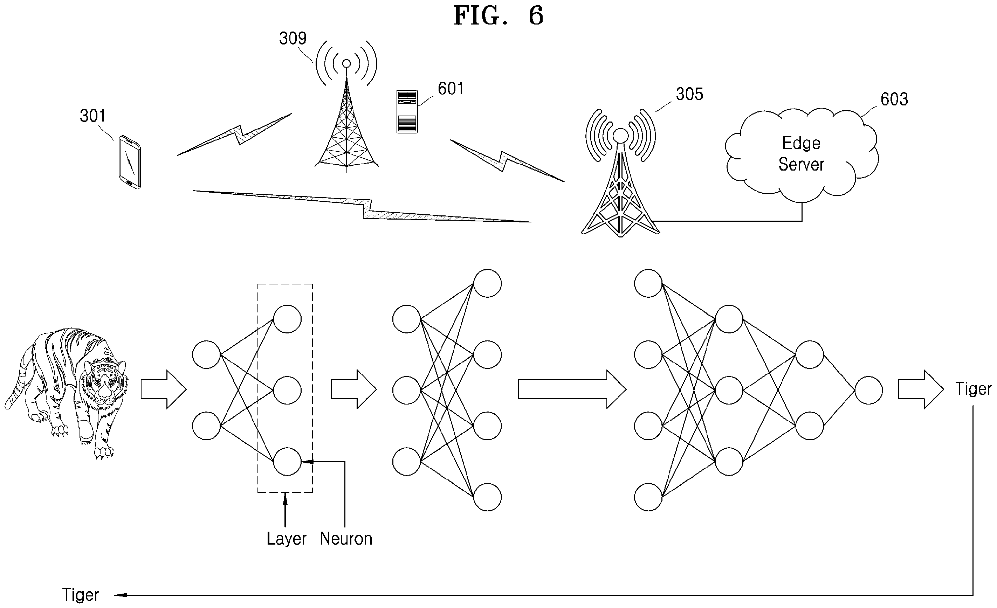

According to an embodiment, the inference task to be executed on the at least one UE may be split with a processing element 601 associated with the aerial cell 309 and an edge server 603 associated with the terrestrial cell 305, as shown in FIG. 6. The processing element 601 and the edge server 603 may perform the inference task within the aerial cell 309 and the terrestrial cell 305, respectively. According to an embodiment, the inference task may be split in a three-way model for the respective inference task at the at least one UE, the terrestrial cell 305, and the aerial cell 309, as shown at operations 533 and 535 of FIG. 5. According to an embodiment, let us consider that a neutral network performing the inference task at the at least one UE has a total of D layers. Layers $D_{UE}$ and $D_{Ux}$ defines the three-way split between the at least one UE, the aerial cell 309, and the terrestrial cell 305. Accordingly, the at least one UE evaluates the layers 0 to $D_{UE}$, the processing element 601 evaluates the layers $D_{UE}$ to $D_{Ux}$. The edge server 603 evaluates the remaining layers $D_{Ux}$ to D. Equation 3 gives the relationship between the parameters under the conditions described in 4:

$$D_{UE} + D_{Ux} \leq D \ldots\ldots\ldots\ldots\ldots\ldots (3)$$

$$0 \leq D_{UE} \leq D; \ D_{Ux} \leq D; \ D_{Ux} \geq D_{UE} \ldots\ldots (4)$$

It should be noted that equations 3 and 4 provide just one example of how the inference task can be split, and other equations may also be used for this purpose.

According to an embodiment, the inference task may be split as to minimize a latency in co-inference between the at least one UE, the aerial cell 309, and the terrestrial cell 305. According to an embodiment, the latency may be minimized using the equation 5:

$$\min_{D_{UE}, D_{Ux},} \left( \sum_{i=1}^{i=U_{ML}} \sum_{d=1}^{d=D_{UE}} \tau_d^{UE} + \varepsilon_{D_{UE}}^{UEUx_l} + \sum_{d=D_{UE}}^{d=D_{Ux}} \tau_d^{Ux} + \varepsilon_{D_{Ux}}^{Ux_l} + \right.$$

$$\left. \sum_{d=D_{Ux}}^{d=D} \tau_d^{MEC} \right) \ldots (5)$$

In equation 5, parameter $\tau_d^{UE}$ represents the computation latency of each layer d at the least one UE. Parameter $\tau_d^{Ux}$ represents the computation latency of each layer d at the aerial cell 309. Parameter $\tau_d^{MEC}$ represents the computation latency of each layer d at the terrestrial cell 305. Parameter $\varepsilon_d^{UEUx}$ gives the communication latency of transferring the intermediate data after layer d from the at least one UE. Parameter $\varepsilon_d^{Ux}$ defines the communication latency of transferring the intermediate data after layer d from the aerial cell 309 to the terrestrial cell 305. It should be noted that equation 5 provides just one example of how the latency may be minimized, and other equations may also be used for this purpose.

According to an embodiment, embodiment, the inference task may be split as to minimize power consumption in in co-inference between the at least one UE, the aerial cell 309, and the terrestrial cell 305. According to an embodiment, the power consumption may be minimized using the equation 6:

$$\min_{D_{UE}, D_{Ux}, l} \left( K_{UE} \times (F_{UE})^2 \times \sum_{d=1}^{d=D_{UE}} \tau_d^{UE} + \sum_{i=1}^{i=U_{ML}} \left( P_{UE} \times \varepsilon_{D_{UE}}^{UE_{Ux_l}} \right) + K_{Ux} \times (F_{Ux})^2 \times$$

$$\sum_{d=D_{UE}}^{d=D_{Ux}} \tau_d^{Ux} + P_{Ux} \times \varepsilon_{D_{Ux}}^{Ux_l} + K_{MEC} \times (F_{MEC})^2 \times \sum_{d=D_{Ux}}^{d=D} \tau_d^{MEC} \right) \ldots (6)$$

In equation 6, $P_{UE}$ and $P_{Ux}$ represent the fixed transmit power of the at least one UE and the aerial cell 309, respectively. The parameters, $K_{UE}$, $K_{Ux}$ and $K_{MEC}$ denote the effective switched capacitance parameter depending on the system on chip (SoC) architecture, of the at least one UE, the aerial cell 309 and the terrestrial cell 305, respectively. The parameters $F_{UE}$, $F_{Ux}$ and $F_{MEC}$ denote the CPU frequencies each for at least one UE, the aerial cell 309 and the terrestrial cell 305, respectively. The power consumption of each layer d at the at least one UE is denoted by the parameter $e_d^{UE}$.

Similarly, the parameter $e_d^{Ux}$ denotes the power consumption of each layer d at the aerial cell 309, and $e_d^{MEC}$ denotes the power consumption of each layer d at the terrestrial cell 305. It should be noted that equation 6 provides just one example of how the power consumption may be minimized, and other equations may also be used for this purpose.

According to an embodiment, a trajectory of the aerial cell 309 may be determined based on a location of the at least one UE, the number of the one or more UEs present in the aerial coverage area, and the one or more feedback parameters. According to an embodiment, trajectory of the aerial cell 309 may be determined using the equation 7:

$$\sum_{i=1}^{N_F} \sum_{k=1}^{K} s_k^i \log_2 \left( 1 + \frac{H_k^i p_k^i}{||r - r_k||^2} \right) \geq \text{Threshold}_{\text{sumTP}} \quad (7)$$

In equation 7, r = (x, y, h) describes the location of the aerial cell 309 and $r_k = (x_k, y_k, 0)$ is the location of the at least one UE k, $s_k^i$ defines if a subcarrier i is allocated to a UE k, Hk is the channel characteristics for a UE k on a subcarrier i, and $p_k^i$ defines the power allocation on the same. The quantity $N_F$ defines the system bandwidth in the number of subcarriers, K defines the total number of UEs, and Threshold$_{\text{sumTP}}$ is a throughput threshold. In an example case in which equation 3 is satisfied, then the at least one UE will experience a reliable link with high throughput above the threshold, Threshold$_{\text{sumTP}}$. The position of the aerial cell given by (x, y, h) is derived for achieving the maximum throughput. Thus, a plurality of positions ($L_1$, $L_2$,..... $L_R$) of the aerial cell 309 is obtained using equation 7.

According to an embodiment, an optimized trajectory ($L_i$) may be determined such that the aerial cell 309 is assigned to a maximum number of UEs with inference tasks in the ASP, using equation 8:

$$Li = \sum_{j=1}^{j=U_{ad_i}} \left( D_T^R / D_T^A \times \frac{e^{-\lambda_j} * \lambda_j^{k_j}}{k_j!} \right) \times \left( \frac{M_{CQI} - R_{CQI}}{S_{CQI}} \right) \ldots (8)$$

In equation 8, $U_{ad_i}$ is a number of UEs present in the aerial coverage area.

According to an embodiment, the trajectory may be determined to minimize a latency in co-inference between the at least one UE, the aerial cell, and the terrestrial cell. According to an embodiment, the latency may be minimized using the equation 9:

$$\alpha_{latency} =$$

$$\frac{\sum_{j=1}^{j=U_{ad}} \left( \left( \sum_{d=1}^{d=D_{UE}} \tau_d^{UE} + \varepsilon_{D_{UE}}^{UE_{gNB}} + \sum_{d=D_{UE}}^{d=D} \tau_d^{MEC} \right) - \left( \sum_{d=1}^{d=D_{UE}} \tau_d^{UE} + \varepsilon_{D_{UE}}^{UE_{Ux_{L_i}}} + \sum_{d=D_{UE}}^{d=D_{Ux}} \tau_d^{Ux} + \varepsilon_{D_{Ux}}^{Ux_{L_i}} + \sum_{d=D_{Ux}}^{d=D} \tau_d^{MEC} \right) \right)}{\sum_{j=1}^{j=U_{ad}} \left( \sum_{d=1}^{d=D_{UE}} \tau_d^{UE} + \varepsilon_{D_{UE}}^{UE_{gNB}} + \sum_{d=D_{UE}}^{d=D} \tau_d^{MEC} \right)} \times 100 \ldots (9)$$

It should be noted that equation 9 provides just one example of how the latency may be minimized, and other equations may also be used for this purpose.

According to another embodiment, the trajectory may be determined to minimize a power consumption in the co-inference between the at least one UE, the aerial cell, and the terrestrial cell.

After the trajectory is determined, the at least one UE may be connected with the aerial cell based on the determined trajectory.

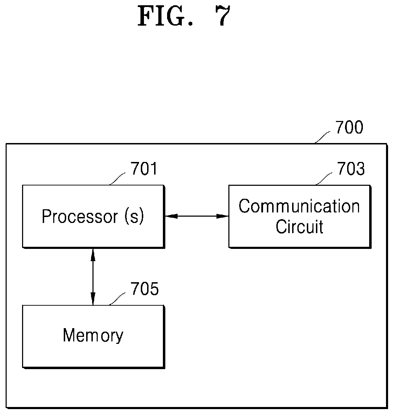

FIG. 7 illustrates a block diagram of a system for assigning the aerial cell 309 to the one or more UEs 301 in the wireless communication system, in accordance with an embodiment of the disclosure.

According to an embodiment, the configuration of FIG. 7 may be understood as a part of the configuration of the terrestrial cell 305. According to an embodiment, the method 400 illustrated in FIG. 4 may be implemented in the system 700.

According to an embodiment, the system 700 corresponds to the terrestrial cell 305. Referring to FIG. 7, the system 700 may include "processor(s)" which is at least one processor 701, a communication circuit 703, and a memory 705. The communication circuit may be referred to as a communicator or a communication interface.

As an example, the at least one processor 701 may be a single processor or a number of processors, all of which could include multiple computing circuits. The at least one processor 701 may be implemented as one or more microprocessors, microcomputers, microcontrollers, digital signal processors, central processing units, state machines, logic circuitries, and/or any devices that manipulate signals based on operational instructions. Among other capabilities, the at least one processor 701 is configured to fetch and execute computer-readable instructions and data stored in the memory 705. The at least one processor 701 may include one or a plurality of processors. At this time, one or a plurality of processors 701 may be a general-purpose processor, such as a Central Processing Unit (CPU), an Application Processor (AP), or the like, a graphics-only processing unit such as a Graphics Processing Unit (GPU), a Visual Processing Unit (VPU), and/or an AI-dedicated processor such as a Neural Processing Unit (NPU). The one or a plurality of processors 701 may control the processing of the input data in accordance with a predefined operating rule or Artificial Intelligence (AI) model stored in the non-volatile memory and the volatile memory, i.e., the memory 705. The predefined operating rule or AI model is provided through training or learning.

The communication circuit 703 may perform functions for transmitting and receiving signals via a wireless channel. According to an embodiment, the communication circuit 703 may receive the one or more feedback reconfiguration message from the one or more UEs 301, in accordance with techniques described in the disclosure. According to another embodiment, the at least one processor 701 may perform steps 401 and 405 of FIG. 4 via the communication circuit 703.

The memory 705 may include any non-transitory computer-readable medium known in the art including, for example, volatile memory, such as Static Random Access Memory (SRAM) and Dynamic Random Access Memory (DRAM), and/or non-volatile memory, such as Read-Only Memory (ROM), erasable programmable ROM, flash memories, hard disks, optical disks, and magnetic tapes. The memory 705 may also store the one or more reports in accordance with techniques described in the disclosure.

Embodiments are provided as solely examples, and the system 700 may include additional components required to implement the desired functionality of the system 700 in accordance with the requirements of the disclosure.

Accordingly, the disclosure provides techniques for assigning the aerial cell 309 to the one or more UEs 301 in the wireless communication system.

Accordingly, the disclosure provides various advantages. For example, the techniques according to one or more embodiments of the disclosure reduce the communication cost for the UEs while operating within the constraints of the computation capabilities of the UE and the LAP-based aerial cell. The techniques according to one or more embodiments of the disclosure also result in keeping the power consumption of the UEs at the lowest. The techniques according to one or more embodiments of the disclosure also reduce the inference time for inference tasks, while keeping the energy consumption at the lowest. The techniques according to one or more embodiments of the disclosure also reduce the interference latency between the UE, the aerial cell and the terrestrial cell.

Unless otherwise defined, all technical and scientific terms used herein have the same meaning as commonly understood by one of ordinary skilled in the art. The system, methods, and examples provided herein are illustrative only and not intended to be limiting.

Benefits, other advantages, and solutions to problems have been described above with regard to specific embodiments. However, the benefits, advantages, solutions to problems, and any component(s) that may cause any benefit, advantage, or solution to occur or become more pronounced are not to be construed as a critical, required, or essential feature or component of any or all the claims.

While specific language has been used to describe the embodiments of the disclosure, any limitations arising on account thereto, are not intended. As would be apparent to a person in the art, various working modifications may be made to the method in order to implement the inventive concept as taught herein. The drawings and the foregoing description give examples of embodiments. Those skilled in the art will appreciate that one or more of the described elements may well be combined into a single functional element. Alternatively, certain elements may be split into multiple functional elements. Elements from one embodiment may be added to another embodiment.

Embodiments are set out in the following clauses:

Clause 1: A method performed in a wireless communication system, the method comprising:

establishing a data connection between one or more user equipments (UEs) and a terrestrial cell;
receiving one or more feedback parameters from each of the one or more UEs via the data connection; and
assigning an aerial cell to a first UE, among the one or more UEs, based on at least one of the one or more feedback parameters received from the first UE and a number of the one or more UEs present in a coverage area of the aerial cell,
wherein the coverage area is part of a terrestrial coverage area of the terrestrial cell.

Clause 2: The method of clause 1, further comprising:
connecting the first UE with the aerial cell in a dual connectivity (DC) mode.

Clause 3: The method of clause 1 or 2, wherein receiving the one or more feedback parameters comprises at least one of:

receiving the one or more feedback parameters after an expiry of a time period;
receiving the one or more feedback parameters after occurrence of at least one trigger event; or
receiving the one or more feedback parameters based on a request from the terrestrial cell.

Clause 4: The method of any preceding clause, wherein assigning the aerial cell comprises:

determining based on the one or more feedback parameters of the first UE satisfying a corresponding threshold value; and
assigning the aerial cell for an aerial scheduling period based on a determination that the one or more feedback parameters satisfy the corresponding threshold value.

Clause 5: The method of any preceding clause, further comprising:
splitting an inference task to be executed on the first UE with a processing element associated with the aerial cell and an edge server associated with the terrestrial cell.

Clause 6: A system for wireless communication, the system comprising:
at least one processor configured to:

establish a data connection between the one or more user equipments (UEs) and a terrestrial cell;
receive one or more feedback parameters from each of the one or more UEs via the data connection; and
assign an aerial cell to a first UE, among the one or more UEs, based on at least one of the one or more feedback parameters received from the first UE and a number of the one or more UEs present in an aerial coverage area of the aerial cell,
wherein the aerial coverage area is part of a terrestrial coverage area of the terrestrial cell.

Clause 7: The system of clause 6, wherein the at least one processor is further configured to connect the first UE with the aerial cell in a dual connectivity (DC) mode.

Clause 8: The system of clause 6 or 7, wherein the at least one processor is configured to receive the one or more feedback parameters:

after an expiry of a time period,
after occurrence of at least one trigger event, or
based on a request from the terrestrial cell.

Clause 9: The system of any of clauses 6 to 8, wherein for assigning the aerial cell, the at least one processor is configured to:

determine based on the one or more feedback parameters of the first UE satisfying a corresponding threshold value; and
assign the aerial cell for an aerial scheduling period based on a determination that the one or more feedback parameters satisfy the corresponding threshold value.

Clause 10: The system of any of clauses 6 to 9, wherein the at least one processor is configured to:
split an inference task to be executed on the first UE with a processing element associated with the aerial cell and an edge server associated with the terrestrial cell.

Clause 11: The system of any of clauses 6 to 10, wherein the at least one processor is configured to:

determine a trajectory of the aerial cell based on a location of the first UE, a number of the one or more UEs present in the aerial coverage area, and the one or more feedback parameters from the first UE; and
connect the first UE with the aerial cell based on the determined trajectory of the aerial cell.

Clause 12. The system of any of clauses 6 to 11, wherein the one or more feedback parameters comprise a channel quality index (CQI), an inference load (ILD), or a mobility status of the corresponding UE.

Clause 13: The system of clause 12, wherein the CQI indicates a signal strength of a terrestrial signal associated with the terrestrial cell.

Clause 14: The system of clause 12 or 13, wherein the ILD indicates maximum load of an inference task based on available computation power with the corresponding UE and wherein the ILD is determined based on required tera operations per second (TOPS) to execute the inference task and an available power to execute the inference task.

Clause 15: The system of any of clauses 12 to 14, wherein the mobility status of the corresponding UE indicates a probability of the corresponding UE to stay static in the aerial coverage area for an aerial scheduling period.

**Claims**

1. A method performed in a wireless communication system, the method comprising:

   establishing a data connection between one or more user equipments (UEs) and a terrestrial base station;
   receiving one or more feedback parameters from each of the one or more UEs via the data connection; and
   assigning an aerial base station to a first UE, among the one or more UEs, based on at least one of the one or more feedback parameters received from the first UE and a number of the one or more UEs present in a coverage area of the aerial base station,
   wherein the coverage area is part of a terrestrial coverage area of the terrestrial base station.

2. The method as claimed in claim 1, further comprising:
   connecting the first UE with the aerial base station in a dual connectivity (DC) mode.

3. The method as claimed in claim 1 or 2, wherein receiving the one or more feedback parameters comprises at least one of:

   receiving the one or more feedback parameters after an expiry of a time period;
   receiving the one or more feedback parameters after occurrence of at least one trigger event; or
   receiving the one or more feedback parameters based on a request from the terrestrial base station.

4. The method as claimed in any preceding claim, wherein assigning the aerial base station comprises:

   determining based on the one or more feedback parameters of the first UE satisfying a corresponding threshold value; and
   assigning the aerial base station for an aerial scheduling period based on a determination that the one or more feedback parameters satisfy the corresponding threshold value.

5. The method as claimed in any preceding claim, further comprising:
   splitting an inference task to be executed on the first UE with a processing element associated with the aerial base station and an edge server associated with the terrestrial base station.

6. A system for wireless communication, the system comprising:
   at least one processor configured to:

establish a data connection between the one or more user equipments (UEs) and a terrestrial base station;
receive one or more feedback parameters from each of the one or more UEs via the data connection; and
assign an aerial base station to a first UE, among the one or more UEs, based on at least one of the one or more feedback parameters received from the first UE and a number of the one or more UEs present in an aerial coverage area of the aerial base station,
wherein the aerial coverage area is part of a terrestrial coverage area of the terrestrial base station.

7. The system as claimed in claim 6, wherein the at least one processor is further configured to connect the first UE with the aerial base station in a dual connectivity (DC) mode.

8. The system as claimed in claim 6 or 7, wherein the at least one processor is configured to receive the one or more feedback parameters:

after an expiry of a time period,
after occurrence of at least one trigger event, or
based on a request from the terrestrial base station.

9. The system as claimed in any of claims 6 to 8, wherein for assigning the aerial base station, the at least one processor is configured to:

determine based on the one or more feedback parameters of the first UE satisfying a corresponding threshold value; and
assign the aerial base station for an aerial scheduling period based on a determination that the one or more feedback parameters satisfy the corresponding threshold value.

10. The system as claimed in any of claims 6 to 9, wherein the at least one processor is configured to:
split an inference task to be executed on the first UE with a processing element associated with the aerial base station and an edge server associated with the terrestrial base station.

11. The system as claimed in any of claims 6 to 10, wherein the at least one processor is configured to:

determine a trajectory of the aerial base station based on a location of the first UE, a number of the one or more UEs present in the aerial coverage area, and the one or more feedback parameters from the first UE; and
connect the first UE with the aerial base station based on the determined trajectory of the aerial base station.

12. The system as claimed in any of claims 6 to 11, wherein the one or more feedback parameters comprise a channel quality index (CQI), an inference load (ILD), or a mobility status of the corresponding UE.

13. The system as claimed in claim 12, wherein the CQI indicates a signal strength of a terrestrial signal associated with the terrestrial base station.

14. The system as claimed in claim 12 or 13, wherein the ILD indicates maximum load of an inference task based on available computation power with the corresponding UE and wherein the ILD is determined based on required tera operations per second (TOPS) to execute the inference task and an available power to execute the inference task.

15. The system as claimed in any of claims 12 to 14, wherein the mobility status of the corresponding UE indicates a probability of the corresponding UE to stay static in the aerial coverage area for an aerial scheduling period.

# FIG. 1

EP 4 539 356 A1

FIG. 2

FIG. 3

EP 4 539 356 A1

# FIG. 4

400

establishing, by a terrestrial cell, a data connection betwwen the one or more UEs and the terrestrial cell — 401

receiving one or more feedback parameters from each of the one or more UEs over the data connection — 403

assigning, an aerial cell to at least one UE from the one or more UEs based on at least one or more feedback parameters and a number of the one or more UEs present in an aerial coverage area of the aerial cell, — 405

# FIG. 5

Terrestrial cell

UE1 UE2 UE3 UE4

501 Data Connection (UL/DL): UE1,UE2, UE3, UE4

503 One or more Feedback parameters

505
Aerial cell asiigamg to UE1, UE4

Aerial cell

507 RRC Connection Reconfiguration (Measurement) Configuration)

509 RRC Connection Reconfiguration Complete

511 Measurement Report

513 SgNB Add Request

515 SgNB Add Req. Ack

517 RRC Connection Reconfiguration (S-gNB Configuration)

519 RRC Connection Reconfiguration Complete

521 SgNB Reconfiguration Complete

523 Synchronization/Broadcast : UE1, UE4

525 UL Synchronization (RACH) : UE1, UE4

527 DC MAC PHR

529 Data Transfer

531 Data Transfer

533 Task split

535 Task split

EP 4 539 356 A1

# FIG. 6

Layer  Neuron

Tiger

# FIG. 7

| | Europäisches Patentamt<br>European Patent Office<br>Office européen des brevets | **EUROPEAN SEARCH REPORT** | Application Number<br>EP 24 20 5711 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/260404 A1 (VRIND TUSHAR [IN] ET AL) 13 August 2020 (2020-08-13) | 1-4,6-9, 11-13,15 | INV.<br>H04B7/185 |
| Y | * paragraph [0023] - paragraph [0077] *<br>- - - - - | 5,10,14 | H04L5/00<br>H04W24/02 |
| Y | WO 2023/177333 A1 (ERICSSON TELEFON AB L M [SE]) 21 September 2023 (2023-09-21)<br>* paragraph [0056] - paragraph [0059] *<br>* paragraph [0089] *<br>- - - - - | 5,10,14 | H04W36/00<br>H04W48/20<br>H04W72/51<br>H04W76/15<br>H04W88/08<br>G06F9/48<br>G06F9/50<br>G06N3/045 |

| TECHNICAL FIELDS SEARCHED (IPC) |
|---|
| H04B<br>H04W<br>H04L<br>G06F<br>G06N |

The present search report has been drawn up for all claims

| Place of search | Date of completion of the search | Examiner |
|---|---|---|
| The Hague | 13 February 2025 | Mavridis, Theodoros |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**Application Number**

EP 24 20 5711

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

## LACK OF UNITY OF INVENTION
## SHEET B

The Search Division considers that the present European patent application does not comply with the requirements of unity of invention and relates to several inventions or groups of inventions, namely:

```
1. claims: 1-4, 6-9, 11-13, 15

       A method and a system for assigning aerial cell to UEs
                      ---


2. claims: 5, 10, 14

       A method and a system for distributing tasks between a UE
       and an edge server.
                      ---
```

## ANNEX TO THE EUROPEAN SEARCH REPORT
## ON EUROPEAN PATENT APPLICATION NO.

EP 24 20 5711

This annex lists the patent family members relating to the patent documents cited in the above-mentioned European search report.
The members are as contained in the European Patent Office EDP file on
The European Patent Office is in no way liable for these particulars which are merely given for the purpose of information.

13-02-2025

| Patent document cited in search report | Publication date | Patent family member(s) | Publication date |
|---|---|---|---|
| US 2020260404 A1 | 13-08-2020 | NONE | |
| WO 2023177333 A1 | 21-09-2023 | NONE | |

EPO FORM P0459

For more details about this annex : see Official Journal of the European Patent Office, No. 12/82